**Europäisches Patentamt**

**European Patent Office**

**Office européen des brevets**

(19)

(11) Veröffentlichungsnummer: **0 073 893**
**B1**

# EUROPÄISCHE PATENTSCHRIFT

(12)

(45) Veröffentlichungstag der Patentschrift:
14.01.87

(51) Int. Cl.⁴: **G 01 N 29/04**

(21) Anmeldenummer: **82105940.9**

(22) Anmeldetag: **03.07.82**

(54) Verfahren zur automatischen Fertigungskontrolle langgestreckter Werkstücke.

(30) Priorität: **01.09.81 DE 3134482**

(43) Veröffentlichungstag der Anmeldung:
**16.03.83 Patentblatt 83/11**

(45) Bekanntmachung des Hinweises auf die Patenterteilung:
**14.01.87 Patentblatt 87/3**

(84) Benannte Vertragsstaaten:
**BE DE FR GB IT NL SE**

(56) Entgegenhaltungen:
**DE-A-2 239 735**
**DE-A-2 916 519**
**FR-A-2 391 470**
**US-A-4 307 616**

**Die Akte enthält technische Angaben, die nach dem Eingang der Anmeldung eingereicht wurden und die nicht in dieser Patentschrift enthalten sind.**

(73) Patentinhaber: **Hoesch Aktiengesellschaft, Eberhardstrasse 12, D-4600 Dortmund 1 (DE)**

(72) Erfinder: **Gerling, Erich, Ing. grad., Alter Uentroper Weg 293, D-4700 Hamm 1 (DE)**
Erfinder: **Schlusnus, Karl-Heinz, Karl-Mosterts-Strasse 7, D-4700 Hamm 1 (DE)**
Erfinder: **Wahl, Hans-Jürgen, Dipl.-Phys., Breul 16a, D-4400 Münster (DE)**

## Beschreibung

Die Erfindung geht aus von einem Verfahren bzw. einer Vorichtung gemäß dem Oberbegriff des Anspruchs 1 bzw. dem ober begriff des Ansrpuchs 4.

Gemäß der DE-A- 22 39 735 ist ein gattungsgemäßes Verfahren offenbart, weiches mit Hilfe einer separat erzeugten Bezugsgröße eine Zuordnung der reflektierten Ultraschallechos (Reflektorechos) zu den Gruppen "Fehlerechos" oder "Formabweichungen" vornimmt.

Diese separate Bezugsgröße resultiert aus dem aufbereiteten Signalecho einer Abstandsmeßsonde, welche zusätzlich zu den in der Figur 4 bis 10 der DE-A-22 39 735 dargestellten mind. 2 Prüfköpfen allein zur Regelung vorhanden ist.

Mit Hilfe dieser Bezugsgröße erfolgt eine Ortsbzw. Lagebestimmung des Reflektorechos und daraus, unter Berücksichtigung der Laufzeit des Schalls sowie der Relation zwischen Laufzeit des Schalls und der Bewegung der jeweiligen Sende- und Empfangsköpfe relativ zum Werkstück eine Aussage über die Reflektorart, d.h. eine Differenzierung in Fehler- oder Formechos. Nachteilig bei dieser Art der Differenzierung ist, daß das Werkstück eine für die Abstandsmeßsonde als Signalgröße erfaßbare Formabweichung aufweisen muß, wie das z.B. bei unter Pulver geschweißten Schweißnähten der Fall ist. Bei glattgeschliffenen Nähten, wie z.B. bei geschabten HF-Nähten ist ein so geartetes Verfahren der Reflektorechodifferenzierung mangels erfaßbarer Geometrieabweichungen nicht möglich.

Es ist femer eine Vorrichtung bekannt, mit der Formechos und Fehleranzeigen bei z.B. Flossenrohren und Vielkantprofilen unterschieden werden sollen (DE-B-22 51 426). Im Zuge einer Ultraschall-Werkstoffprüfung des Rohrumfanges sollen dabei störende Echos, wie sie an den Flanken der Flossen am Rohr oder den Ecken eines Vielkantprofiles auftreten können, bei der Fehlerbewertung ausgenommen werden. Dies könnte, wie in Spalte 4, Absatz 4, den genanneten Druchschrittt beschriebene, den Nachteil der Unterdrückung eines Fehlersignales haben, wenn Fehler und Profilkante eine gleiche Laufzeit des Echosignales liefern.

Es ist ein weiteres Verfahren (DE-B- 26 o7 783) zur magnetischen oder magnetoinduktiven Erfassung von Längsfehlern im langgestreckten metallischen Prüfmaterial bekannt, bei dem eine Vielzahl von Sonden über dem lückenlos zu prüfenden Werkstückbereich angeordnet ist, wobei zwischen Sonden und Werkstück eine kombinierte rotatorisch-translatorische Relativbewegung herrscht.

Bei dieser Fehlerprüfung sollen die Einflusse einer "Störzone", wie sie z.B. eine langgestreckte Schweißnaht darstellt, erfaßt und ausgeschaltet werden, um Fehler im Prüfmaterial erkennen zu können.

Nachteilig an diesem Verfahren ist, daß eine Vielzahl von Sonden zur sicheren Erfassung von Längsfehlern und eine rotatorische Relativbewegung zwischen Sonden und Werkstück erforderlich ist. Darüber hinaus werden bei diesem Vorschlag langgestreckte Risse in der Schweißnaht von der Bewertung ausgenommen. Außerdem funktioniert dieses Verfahren nur für ferromagnetische Werkstücke.

Es ist eine Anordnung zur Ermittlung von Oberflächenunregelmäßigkeiten an der Innenwand von Metallrohren (DE-B-21 42 372) bekannt, mit der z.B. langgestreckte Walzfehler in nahtlos gewälzten Rohren mit Hilfe einer im Rohrinneren angeordneten kapazitiven Abtasteinrichtung erfaßt werden.

Diese Anordnung funktioniert nur mit einem oszillierenden oder rotatorischen Antrieb für eine Querbewegung zum zu prüfenden Werkstückbereich bzw. zu erfassenden Langsfehlern auf der fehlerhaften Seite des Werkstückes.

Im übrigen aber ist diese Anordnung ausschließlich verwendbar zur Ermittlung von Oberflächenfehlern, nicht jedoch zur kombinierten Erfassung von Werkstoff- und Oberflächenfehlern.

Der Erfindung liegt die Aufgabe zugrunde, bei der automatischen Fertigungskontrolle langgestreckter Werkstücke stets sicher und lückenlos verschiedene Längsfehlerphänomene unterscheiden zu können, wobei speziell systematische Längsfehler an Verbindungsbereichen von Werkstücken, wie Profilkanten, Schweißnahtüberhöhungen, Stauchwulsten, Entgratungsfehler wie Unterschabung oder Restwulste, erkannt und von sonstigen Material- oder Fertigungsfehlern unterschieden werden sollen mit einem optimierten Prüfverfahren bei Verwendung handelsüblicher Bauteile, ohne zusätzlichen Antrieb für die Prüfeinrichtung und ohne Verwendung teurer Hilfsstoffe mit Prüfgeschwindigkeiten von mindestens lo bis 100 m/min in Längsrichtung zum zu prüfenden Werkstückbereich.

Erfindungsgemäß wird die Aufgabe durch die in den Kennzeichenteilen der Ansprüche 1 und 4 enthaltenen Merkmale gelöst.

Vorteilhafte Weiterbildungen des erfindungsgemäßen Verfahrens und der Vorrichtung sind in den abhängigen Ansprüchen erfaßt.

Der Erfindung liegt die Erkenntnis zugrunde, daß z.B. Schweißfehler oder Materialfehler relativ kurz sind im Verhältnis zu Schweißnahtraupen oder von einer fehlerhaften Entgratung erzeugte geometrische Unregelmäßigkeiten der Werkstückoberfläche. Weiterhin lag die Erkenntnis vor, für besondere Anwendungsfälle, nämlich bei der Überwachung einer Einrichtung zur Entfernung von Innengraten in geschweißten Rohren, insbesondere fehlerhafte Tiefschabung, Schrägschabung oder Restwulste, keine konventionellen Ultraschall-Wanddickenmeßgeräte einsetzen zu können, da der Schweißnahtbereich auch bei abgearbeiteter äußerer Nahtüberhöhung viel zu heiß ist, um ohne teure Ankoppelmedien arbeiten zu können. In diesem Fall wäre auch das Anordnen von Abtasteinrichtungen im Rohrinneren problematisch und bei einem geringen Rohrdurchmesser praktisch unmöglich wegen der Behinderung durch die anfallenden Entgratungsspäne.

Mit dem erfindungsgemäßen Verfahren ist es möglich, bei Verwendung bekannter Ultraschallprüfköpfe zur Schweißfehlerüberwachung direkt hinter dem Schweißaggregat, die neben dem zu überwachenden Werkstückbereich über dem Werkstück angeordnet sind, Entgratungsfehler auf der Werkstückunterseite durch eine Fehlerlängenbewertung von sonstigen Schweiß- oder Materialfehlern zu trennen. Die Erkennung von Schweiß- oder Materialfehlern wird mit einem ersten vorgegebenen Schwellwert ermöglicht. Die Integration der Signale längs des geprüften Werkstückbereiches und der Vergleich des Integrations-Ergebnisses mit einem zweiten vorgegebenen Schwellwert ermöglicht somit die Unterscheidung der langgestreckten Fehler von anderen Fehlern trotz evtl. gleicher oder kleinerer Amplitudenhöhe der verschiedenen Signale.

Wegen der Möglichkeit der Anordnung der Prüfköpfe seitlich einer heißen Schweißnaht kann bei einer üblichen Wasserankopplung mit handelsüblichen Ultraschallprüfköpfen gearbeitet werden. Die Relativbewegung zwischen Ultraschallprüfköpfen und Werkstück wird von dem durchlaufenden Werkstück erzeugt; ein Zusatzantrieb für die Prüfeinrichtung ist nicht erforderlich.

Ein Vergleich des Integrations-Ergebnisses der Prüfspuren auf beiden Seiten des geprüften Werkstückbereiches liefert erfindungsgemäß als Differenz eine Information über eine mögliche Asymmetrie einer langgestreckten Geometriabweichung, z.B. einer schrägen Tiefschabung beim Abhobeln einer Schwecßnahtüberhöhung. Erfindungsgemäß läßt sich diese Differenz, d.h. Asymmetrie der Kontur, sehr einfach separat für beide Prüfspuren anzeigen oder melden, so daß der Bedienungsmann das Hobelwerkzeug ausrichten kann.

Die Wahl der Einschallwinkel bei der Ultraschallprüfung auf innere Fehler wird bekanntermaßen je nach Prüfobjekt bzw. dessen Gestalt und möglicher Geometrieabweichungen vorgenommen. Die Praxis hat gezeigt, daß bei bestimmten Produkten kurze Materialfehler zulässig sind, kleine langgestreckte, kerbartige Geometrieabweichungen aber nicht. Durch verschieden hohe Schwellwerte lassen sich beide Signal-Amplituden den Fehlern entsprechend bewerten.

Auch bei Wahl von Ultraschallprüfköpfen mit verschiedenen Einschallwinkeln ergeben sich bei den Signalfehlern unterschiedliche Amplituden.

Nachfolgend soll anhand von schematischen Zeichnungen eine Ausführungsform der Erfindung näher erläutert werden.

Es zeigen

Fig. 1 ein Blockschaltbild mit der erfindungsgemäßen Vorrichtung

Fig. 2 eine schematisierte Aufzeichnung einer Registriereinrichtung einer Ultraschallprüfanlage

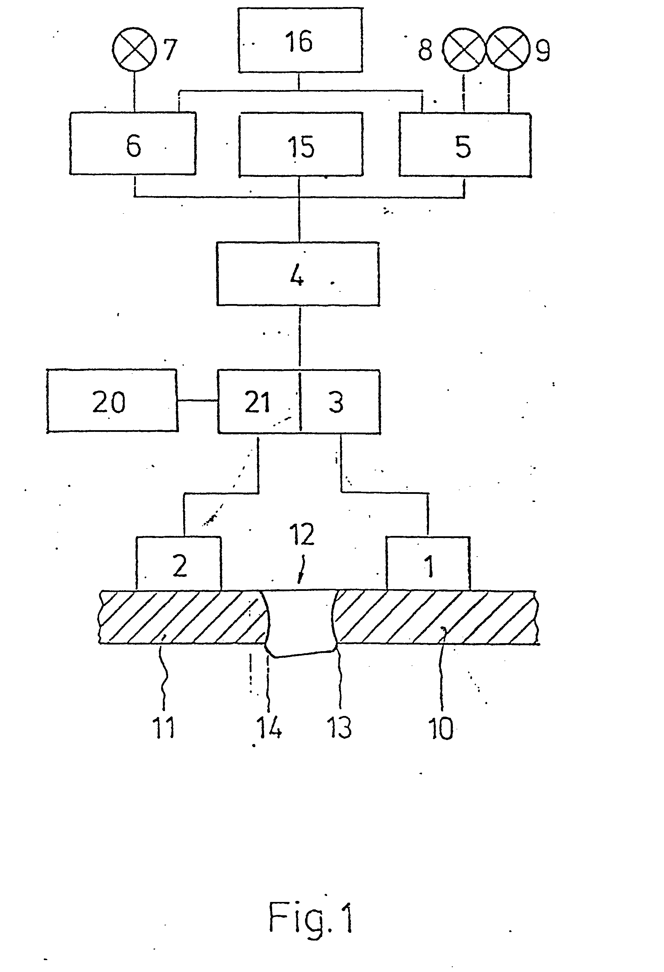

Die Bleche 10 und 11 sind im Verbindungsbereich 12 durch Stumpfschweißung miteinander zu einem Werkstück verbunden (Fig. 1). Die obere Schweißnahtüberhöhung im Verbindungsbereich 12 ist vollkommen abgearbeitet worden; die untere Schweißnahtüberhöhung zeigt eine fehlerhafte Schrägschabung mit einer Neigung von Kante 14 zu Kante 13.

Die Stumpfschweißung der Bleche 10, 11 und die Entfernung der Schweißnahtüberhöhungen erfolgt kontinuierlich im Durchlauf in einer nicht dargestellten Fertigungsanlage mit einer Geschwindigkeit von 50 m/min. Die Werkstückbewegungsrichtung liegt senkrecht zur Darstellungsebene.

Zwei Ultraschall-Winkelprüfköpfe (US-Köpfe) 1, 2 mit Einschallwinkeln von 60° einer Ultraschallprüfanlage sind stationär seitlich des Verbindungsbereiches 12 des Werkstückes direkt hinter der Einrichtung zur Entfernung der Schweißnahtüberhöhungen einander gegenüberliegend angeordnet. Sie arbeiten im Impuls-Echo-Betrieb, angeregt durch Sender 20, geschaltet über prüfkopfumschalter 21.

Die vom Empfänger 3 aufgenommenen und vorverstärkten Signale von Fehlerechos und Formechos werden über einen Hauptverstärker 4 zum Monitor 6 und zum Integrator-Monitor 5 geleitet. Eine Lampe 7 meldet das evtl. Überschreiten eines vorgegebenen Schwellwertes von 5 % oder 10 % der Blechdicke durch Fehler, z.B. Schlackeneinschluß oder Randzonenfehler. Schwellwertüberschreitungen bei Formfehlern, wie z.B. fehlerhafte Schabung im Verbindungsbereich 12 der Bleche 10, 11 werden von den Lampen 8, 9 gemeldet, wobei Lampe 8 dem linken und Lampe 9 dem rechten Abschnitt des Verbindungsbereiches 12 zugeordnet ist. Liegt eine Schrägschabung wie hier vor, mit einer Neigung von Kante 14 zu Kante 13, wird nur Lampe 8 geschaltet, bei waagerechter fehlerhafter Schabung beide Lampen 8, 9. Die Prüfempfindlichkeit der US-Köpfe kann mit Bildschirm 15 eingestellt sowie deren Funktion überwacht werden.

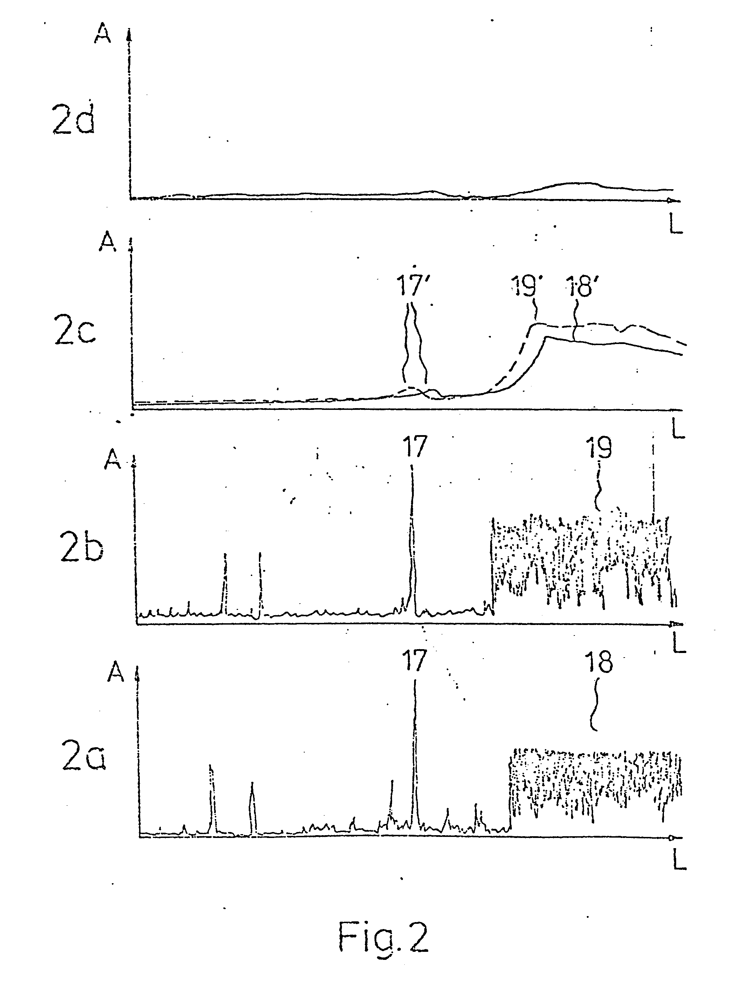

Fig. 2 zeigt schematisch die Aufzeichnung von Anzeige-Signalen aufgrund vorliegender Fehler am Werkstück in einer Registriereinrichtung 16 (Fig. 1); es ist die Amplitude der Signale über einen Längenabschnitt eines geprüften Werkstückes aufgetragen:

Fig. 2a stellt die Echos am US-Kopf 1 aufgrund von Materialfehlern 17 und Formfehlern 18 aufgrund fehlerhafter Schabung in Position der Kante 13 (Fig. 1) dar.

Fig. 2b stellt analog dazu Echos von Materialfehlern 17 und Formfehlern 19 in Position der Kante 14 (Fig. 1) dar.

Fig. 2c stellt den Signalverlauf am Ausgang des Integrators im Integrator-Monitor 5 dar. Die relativ kurzen Materialfehler liefern bei Integration der Flächeninhalte unter dem Signal-Verlauf gemäß Fig. 2a nur einen geringfügigen Anstieg 17' des Integrator-Signales aus. Eine längere Fehlerstelle aufgrund von Formfehlern (Kanten 13, 14) führt dagegen zu einem starken Anstieg 18', 19' des Integrator-Signales.

Die Asymmetrie des Formfehlers und der resultierenden Signalverläufe 18, 18', 19, 19' ist in Fig. 2d aufgezeigt als Differenz der Integrator-Signale 18', 19'.

Mit der vorhergehend näher erläuterten Ausführungsform der Erfindung lassen sich außer der dargestellten Schrägschabung einer Schweißnahtüberhöhung natürlich noch andere Geometrie-Fehlerformen im zu prüfenden Werkstückbereich, wie z.B. die Zustände: oben/unten ungeschabt, Restwulste, Blechkantenversatz, Tiefschabung, Werkzeugbruch, Nuten und Riefen im Werkstück nachweisen.

Das erfindungsgemäße Verfahren und die Vorrichtung lassen sich natürlich auch für andere Einsatzzwecke anwenden, z.B. beim Prüfen der Schweißnaht von Längsnahtrohren und Spiralnahtrohren, Nuthobeln, Nutfräsen usw.

Voraussetzung für die Verfahrensanwendung ist lediglich, daß die Kontur des zu prüfenden Werkstückes im mathematischen Sinne stetig ist, also rund, gerade usw.

## Bezugszeichenliste

A Amplitude
L Werkstücklänge
1 Ultraschallwinkelprüfkopf 1
2 Ultraschallwinkelprüfkopf 2
3 Empfanger
4 Hauptverstärker
5 Integrator-Monitor
6 Monitor
7 Lampe
8 Lampe
9 Lampe
10 Blech
11 Blech
12 Verbindungsbereich
13 Kante
14 Kante
15 Bildschirm
16 Registriereinrichtung
17 Materialfehleranzeige
18 Formfehleranzeige
19 Formfehleranzeige
20 Sender
21 Prüfkopfumschalter

## Patentansprüche

1. Verfahren zur automatischen Fertigungskontrolle langgestreckter Werkstücke mit einer Unterscheidung zwischen Formanzeigen, die aufgrund solcher Stellen eines Werkstückes auftreten, die von geometrisch stetigen Oberflächen abweichen und von Material- und Werkstoffehlern herrührenden Fehleranzeigen, bei dem mindestens ein der Fehlerfeststellung dienender im Impulsechoverfahren arbeitender Ultraschallprüfkopf auf jeder Seite eines zu prüfenden langgestreckten Werkstückbereiches diesen kontinuierlich prüft, bei dem Werkstück und Prüfköpfe relativ zueiander bewegt werden und bei dem die von den Prüfköpfen längs des Werkstückbereiches empfangenen Signale - der jeweiligen Seite zugeordnet - erfaßt werden, dadurch gekennzeichnet, daß das Werkstück nur längs des zu prüfenden langgestreckten Werkstückbereiches relativ zu den Prüfköpfen bewegt wird, daß die von den Prüfköpfen empfangenen Signale erstens mit einem ersten vorgegebenen Schwellwert verglichen und zweitens zunächst integriert und dann mit einem zweiten vorgegebenen Schwellwert verglichen werden und daß das evtl. Überschreiten der Schwellwerte separat angezeigt wird.

2. Verfahren nach Anspruch 1, dadurch gekennzeichnet, daß neben der Schwallenbewertung der Integrationsergebnisse deren Amplituden angezeigt und/oder registriert werden.

3. Verfahren nach Anspruch 1 oder 2, dadurch gekennzeichnet, daß eine Differenz der Integrationsergebnisse angezeigt und/oder daß gemeldet wird, ob die Differenz der Intetgrationsergebnisse oberhalb eines dritten vorgegebenen Schwellwertes liegt.

4. Vorrichtung zur automatischen Fertigungskontrolle langestreckter Werkstücke mit einer Unterscheidung zwischen Formanzeigen, die aufgrund solcher Stellen eines Werkstückes auftreten, die von geometrisch stetigen Oberflächen abweichen und von Material- und Werkstoff-Fehlern herrührenden Fehleranzeigen mit mindestens einem der Fehlerfeststellung dienenden Impuls-Echo-Ultraschall-Prüfkopf (1, 2) für jede Seite eines zu prüfenden langgestreckten Werkstückbereiches, mit einer Einrichtung zur relativen Bewegung der Prüfköpfe (1, 2) und des Werkstückes (10 - 14) und mit Einrichtungen (3 - 9, 15, 16), die die von den Prüfköpfen empfangenen Signale - der jeweiligen Seite zugeordnet - erfassen, weiterverarbeiten, anzeigen und registrieren, dadurch gekennzeichnet,

daß die Einrichtung zur relativen Bewegung von Werkstück und Prüfköpfen so ausgebildet ist, daß das Werkstück nur längs eines zu prüfenden langgestreckten Werkstückbereiches relativ zu den Prüfköpfen bewegt wird,

daß eine Einrichtung mit einem Monitor (6) vorhanden ist, mit der die von den Prüfköpfen (1, 2) empfangenen Signale mit einem ersten vorgegebenen Schwellwert verglichen werden können, daß ferner ein Integrator-Monitor (5) vorhanden ist, der mit Schwellwertvergleichern ausgestattet ist, denen einerseits ein zweiter Schwellwert, andererseits ein dritter, auf die Differenz der Integrationsergebnisse bezogener Schwellwert vorgegeben werden können,

daß die Vorrichtung Einrichtungen (7-9), mit denen das eventuelle Überschreiten der Schwellwerte separat gemeldet werden kann

und/oder einen Analogausgang für die Integrationsergebnisse besitzt.

5. Vorrichtung nach Anspruch 4 gekennzeichnet durch je zwei auf jeder Seite des zu prüfenden Werkstückbereiches hintereinander angeordnete Ultraschallprüfköpfe mit unterschiedlichen Einschallwinkeln.

6. Vorrichtung nach Anspruch 4 oder 5, gekennzeichnet durch optische Signale erzeugende Meldeeinrichtungen (7 - 9).

7. Vorrichtung nach Anspruch 4 oder 5, gekennzeichnet durch akustische Signale erzeugende Meldeeinrichtungen.

**Claims**

1. Method for the automatic production control of elongate workpieces involving a discrimination between shape indications which occur as a result of parts of a workpiece which deviate from geometrically regular surfaces and flaw indications originating from material defects, in which at least one ultrasonic probe operating in the pulse-echo mode and serving to determine flaws is provided on each side of an elongate workpiece zone to be examined in order to examine this zone continuously, in which the workpiece and probes are moved relative to one another, and in which the signals - associated with the respective sides - received by the probes along the length of the workpiece zone are evaluated, characterised in that the workpiece is moved relative to the probes only along the elongate workpiece zone to be examined, in that the signals received by the probes are first compared with a first predetermined threshold value, secondly are integrated overall and then are compared with a second predetermined threshold value, and in that any exceeding of the threshold values is indicated separately.

2. Method according to claim 1, characterised in that, in addition to the threshold evaluation, the results of the integration of the amplitudes are indicated and/or recorded.

3. Method according to claim 1 or 2, characterised in that any difference in the results of the integration is indicated and/or in that it is shown whether the difference in the results of the integration lies above a third predetermined threshold value.

4. Apparatus for the automatic production control of elongate workpieces involving a discrimination between shape indications which occur as a result of parts of a workpiece which deviate from geometrically regular surfaces and flaw indications originating from material defects, comprising at least one pulse-echo ultrasonic probe (1,2) serving to determine flaws for each side of an elongate workpiece zone to be examined, means for effecting relative movement of the probes (1,2) and the workpiece (10-14), and means (3-9, 15,16) to evaluate, process, indicate and record the signals received by the probes associated with the respective sides of the workpiece, characterised in that

the means for effecting relative movement of workpiece and probes is formed so that the workpiece is moved relative to the probes only along an elongate workpiece zone which is to be examined,

in that a device comprising a monitor (6) is provided by means of which the signals received by the probes (1,2) can be compared with a first predetermined threshold value,

in that an integrating monitor (5) is also provided which is equipped with threshold value comparator means by means of which comparison can be made on the one hand with a second threshold value and on the other with a third threshold value referred to the difference of the integrated results,

and in that the apparatus comprised means (7-9) by which any exceeding of the threshold values can be indicated separately and/or an analog output of the results of the integration is provided.

5. Apparatus according to claim 4, characterised in that a pair of ultrasonic probes having different beam angles are arranged one behind the other on each side of the workpiece zone to be examined.

6. Apparatus according to claim 4 or 5, characterised by indicating devices (7-9) which produce optical signals.

7. Apparatus according to claim 4 or 5, characterised by indicating devices which produce acoustic signals.

**Revendications**

1. Procédé pour le contrôle automatique de la fabrication de pièces allongées, avec différenciation entre des indications de forme qui sont obtenues sur la base des parties d'une pièce qui s'écartent de surfaces géométriques constantes, et des indications de défauts résultant des défauts de matériau et de matière, dans lequel au moins une tête de contrôle aux ultrasons, fonctionnant suivant le procédé par écho d'impulsion et servant à la détermination des défauts, les contrôle en continu, de chaque côté d'une zone de la pièce allongée à contrôler, dans lequel la pièce et les têtes de contrôle se déplacent les unes par rapport aux autres, et les signaux reçus par les têtes de contrôle le long de la zone de la pièce, pour chaque côté, sont captés, caractérisé en ce que la pièce est déplacée par rapport aux têtes de contrôle, uniquement le long de la zone de la pièce allongée à contrôler, les signaux reçus par les têtes de contrôle sont d'abord comparés à une première valeur seuil prédéterminée, sont ensuite intégrés, puis comparés à une seconde valeur seuil prédéterminée, et le dépassement éventuel des valeurs seuil est affiché séparément.

2. Procédé selon la revendication 1, caractérisé en ce que, en plus de l'évaluation des résultats de l'intégration par rapport aux valeurs seuils, leur amplitude est également affichée et/ou enregistrée.

3. Procédé selon la revendication 1 ou 2, caractérisé en ce qu'une différence des résultats de l'intégration est affichée et/ou signalée lorsque la différence des résultats de l'intégration est supérieure à une troisième valeur seuil prédéterminée.

4. Dispositif pour le contrôle automatique de la fabrication de pièces allongées, avec différenciation entre les indications de forme qui sont obtenues sur la base des parties d'une pièce qui s'écartent de surfaces géométriques constantes, et des indications de défauts résultant de défauts de matière et de matériau, avec au moins une tête de contrôle aux ultrasons (1, 2) fonctionnant par écho d'impulsion et servant à la détermination des défauts pour chaque côté d'une zone de la pièce allongée à contrôler, avec un dispositif pour assurer un déplacement relatif des têtes de contrôle (1, 2) et de la pièce (10, 14), et des dispositifs (3-9, 15, 16) de réception, de traitement, d'affichage et d'enregistrement des signaux reçus par les têtes de contrôle, correspondant à chaque côté, caractérisé en ce que le dispositif de déplacement relatif de la pièce et des têtes de contrôle est réalisé de telle sorte que la pièce n'est déplacée que le long d'une zone de la pièce allongée à contrôler par rapport aux têtes de contrôle, en ce qu'il existe un dispositif avec un moniteur (6) au moyen duquel les signaux des têtes de contrôle (1, 2) peuvent être comparés à une première valeur seuil prédéterminée, en ce qu'il existe de plus un intégrateur-moniteur (5) pourvu de comparateurs de valeurs seuils, auxquels peuvent être appliquées, d'une part, une seconde valeur de seuil et, d'autre part, une troisième valeur de seuil se rapportant à la différence des résultats d'intégration, en ce que le dispositif contient des appareils (7, 9) permettant d'annoncer séparément le dépassement éventuel des valeurs seuils et/ou possède une sortie analogique pour les résultats d'intégration.

5. Dispositif selon la revendication 4, caractérisé par deux têtes de contrôle aux ultrasons disposées de chaque côté de la zone de la pièce à contrôler, avec des angles d'irradiation acoustique différents.

6. Dispositif selon la revendication 4 ou 5, caractérisé par des appareils de signalisation émettant des signaux optiques (7, 9).

7. Dispositif selon la revendication 4 ou 5, caractérisé par des dispositifs de signalisation émettant des signaux acoustiques.

Fig.1

Fig. 2